# EUROPÄISCHE PATENTSCHRIFT

(11) **EP 2 115 344 B1**
(45) Veröffentlichungstag und Bekanntmachung des Hinweises auf die Patenterteilung: **02.06.2010**
(21) Anmeldenummer: 08707542.0
(22) Anmeldetag: 04.02.2008
(51) Int. Cl.: F17C 5/00, F25B 45/00

(54) **VERBINDUNGSVORRICHTUNG ZUM VERBINDEN EINES DRUCKBEHÄLTERS MIT EINEM FLÜSSIGGASEINFÜLLSTUTZEN**
CONNECTING DEVICE FOR CONNECTING A PRESSURE RESERVOIR TO A LIQUID GAS FILLER NECK
DISPOSITIF DE RACCORDEMENT PERMETTANT DE RACCORDER UN CONTENANT À FLUIDE SOUS PRESSION À UNE TUBULURE DE REMPLISSAGE D'UN RÉSERVOIR GPL

(30) Priorität: 06.02.2007 DE 102007005864
(43) Veröffentlichungstag der Anmeldung: 11.11.2009
(73) Patentinhaber: Tunap Industrie Chemie GmbH & Co. Produktions KG, 82515 Wolfratshausen (DE)
(72) Erfinder: SPRÜGEL, Friedrich, A., 81825 München (DE)
(74) Vertreter: Wagner, Bernhard Peter
(86) Internationale Anmeldenummer: PCT/EP2008/000871
(87) Internationale Veröffentlichungsnummer: WO 2008/095675

(56) Entgegenhaltungen:
- EP-A- 0 527 561
- WO-A-98/22344
- DE-U1-202005 015 051
- GB-A- 2 127 533
- US-A- 3 749 141

## Beschreibung

Die Erfindung betrifft eine Verbindungsvorrichtung zum Verbinden eines Druckbehälters mit einem Flüssiggastankeinfüllstutzen, insbesondere für Flüssiggas-betriebene Kraftfahrzeuge.

Hinsichtlich der Preis- und Anbietersituation für Flüssiggase entwickelt sich mittlerweile ein Markt dafür, Benzin-betriebene Kraftfahrzeuge mit einem Flüssiggastank und den erforderlichen zusätzlichen Einrichtungen zu versehen, so dass das Fahrzeug sowohl mit Flüssiggas als auch Benzin betrieben werden kann. Normalerweise geschieht das in einer Weise, dass das Fahrzeug mit Benzin gestartet und solange mit Benzin betrieben wird, bis der Motor seine Betriebstemperatur erreicht hat, wonach der Fahrer auf Flüssiggas umschaltet. Es besteht jedoch auch die Möglichkeit den Motor unmittelbar mit Flüssiggas zu starten.

Das Problem bei mit Flüssiggas betriebenen Verbrennungsmotoren besteht darin, dass Flüssiggas anders als Benzin keine Bestandteile enthält, die nur unvollständig verbrennen und so die Schmierung, insbesondere der Einlassventile sicherstellen.

Bis jetzt werden dem Flüssiggas in der Regel solche Additive vom Hersteller nicht zugesetzt, die die erforderliche Schmierwirkung vom Flüssiggastank bis zu dem eigentlichen Verbrennungsmotor einschließlich der Ein- und Auslassventile sicherstellen.

Wenn jedoch Kraftfahrzeuge mit Flüssiggas betrieben werden, bei denen ein solches Additiv nicht bereits enthalten ist, ergibt sich das Problem der Zufuhr dieser notwendigen Additive in das Flüssiggas. Da der Flüssiggastank unter Druck steht, ist es nicht ohne weiteres möglich, die Additivmischung einfach in den Flüssiggastank einzubringen.

Die DE 20 2005 015 051 U1 beschreibt eine Zuführvorrichtung und ein Einfüllsystem zum Einleiten eines Zusatzstoffes in ein unter Druck stehendes Fluid enthaltendes System. Bei diesem Einfüllsystem ist eine Zuführvorrichtung vorgesehen, durch die ein Zusatzstoff in ein unter Druck stehendes Fluid enthaltendes System von einem Druckbehälter eingeleitet werden kann. Hierbei weist der Druckbehälter einen Auslassstutzen auf, der von ersten und zweiten Dichtflächen umgeben ist, die wiederum mit ersten und zweiten Dichtungsringen an dem zugehörigen Anschluss der Zuführvorrichtung zusammenwirken, wenn der Druckbehälter mit seinem Auslassstutzen in die Öffnung des zugehörigen Anschlusses der Zuführvorrichtung eingesetzt wird. Hierbei wird die erste Dichtfläche von einer den Auslassstutzen umgebenen Radialfläche gebildet, während die zweite Dichtfläche von einer Innenumfangsfläche einer den Auslassstutzen umgebenden, sich in Richtung des Stutzens erstreckenden Ringwand gebildet wird. Bei dem Einsetzen des Anschlusses der Zuführvorrichtung in den Auslassstutzen des Druckbehälters dichtet zunächst der zweite Dichtungsring, dann bei einem weiteren Einschrauben der erste Dichtungsring die gebildete Verbindung gegen die Umwelt ab.

Der Erfindung liegt die Aufgabe zugrunde, eine Verbindungsvorrichtung zum Verbinden eines Druckbehälters mit einem Flüssiggastankeinfüllstutzen zu schaffen, die einen kompakten und stabilen Aufbau aufweist und durch die ein einfaches Einfüllen eines Additivs in einen Flüssiggastank ermöglicht wird.

Diese Aufgabe wird durch die Verbindungsvorrichtung nach Anspruch 1 gelöst. Vorteilhafte Ausgestaltungen und Weiterbildungen der Erfindung sind in den Unteransprüchen dargelegt.

Erfindungsgemaß ist also eine Verbindungsvorrichtung zum Verbinden eines Druckbehälters mit einem Flüssiggastankeinfüllstutzen vorgesehen, wobei der Druckbehälter ein Anschlussstück mit einem Auslassventil aufweist, das durch einen punktuellen Druck in Richtung des Druckbehälters geöffnet werden kann. Die Verbindungsvorrichtung umfasst hierbei einen Adapterkörper, der an seinem einen Ende einen Tank-Anschlussstutzen zur druckdichten, lösbaren Verbindung mit dem Flüssiggastankeinfüllstutzen, an seinem anderen Ende einen Druckbehälter-Anschlussstutzen mit einem stirnseitigen Dichtungselement zur druckdichten, lösbaren Verbindung mit dem Druckbehälter, und in seinem Mittelteil einen Durchlass aufweist, durch den ein Additiv oder dergleichen von dem Druckbehälter-Anschlussstutzen zu dem Tank-Anschlussstutzen leitbar ist und an dem ein stiftförmiges Betätigungselement angebracht ist, das derart in den Druckbehälter-Anschlussstutzen hineinragt, dass es bei einem Verbinden des Druckbehälter-Anschlussstutzens mit dem Druckbehälter das Auslassventil desselben erst öffnet, wenn das Dichtungselement an der Stirnseite des Druckbehälter-Anschlussstutzens einen dichten Kontakt zwischen Druckbehälter-Anschlussstutzen und Druckbehälter geschaffen hat, so dass das Auslassventil unter weiterer Komprimierung des Dichtungselement geöffnet werden kann.

Die erfindungsgemäße Verbindungsvorrichtung wird also als Adapterstück zwischen dem Flüssiggastankeinfüllstutzen und dem Druckbehälter verwendet, um ein Additiv aus einem Druckbehälter in den Flüssiggastank einzuleiten. Hierfür weist die Verbindungsvorrichtung an ihren Enden einen Tank-Anschlussstutzen und gegenüberliegend einen Druckbehälter-Anschlussstutzen auf, wobei für eine Betankung zunächst die Verbindungsvorrichtung an dem Flüssiggastankeinfüllstutzen aufgeschraubt wird, und danach der Druckbehälter so in den Druckbehälteranschlussstutzen eingeschraubt wird, dass ein Dichtungselement an der Stirnfläche der Verbindungsvorrichtung mit der gegenüberliegenden Oberfläche des Druckbehälters einen dichten Kontakt bildet und bei einem weiteren Einschrauben und einer Komprimierung dieses Dichtungselements ein stiftförmiges Betätigungselement, das in den Druckbehälteranschlussstutzen hineinragt, auf ein Auslassventil des Druckbehälters drückt und dieses öffnet, wobei das Additiv in dem Druckbehälter ausströmt und über einen Durchlass im Mittelteil der Verbindungsvorrichtung und über den Tankanschlussstutzen in den Flüssiggastank einströmen kann.

Bei einer vorteilhaften Ausgestaltung der Erfindung ist vorgesehen, dass der Tank-Anschlussstutzen als ein zylinderförmiges Anschlussstück mit einem Außengewinde zur Aufnahme in dem mit einem Innengewinde versehenen Flüssiggastankeinfüllstutzen ausgebildet ist.

Hierbei ist es besonders zweckmäßig, wenn das zylinderförmige Anschlussstück in einer stirnseitigen, axialen Bohrung des Adapterkörpers befestigt ist.

Um einen dichten Kontakt zwischen Flüssiggastankeinfüllstutzen und Tank-Anschlussstutzen der Verbindungsvorrichtung zu erreichen, ist es zweckmäßig, wenn auf einer dem Tank-Anschlussstutzen benachbarten Stirnfläche des Adapterkörpers ein erster Dichtungsring angeordnet ist, der den Tank-Anschlussstutzen umgibt.

Für einen stabilen Halt des ersten Dichtungsrings ist es dabei vorteilhaft, wenn in der Stirnfläche des Adapterkörpers eine Ringnut gebildet ist, die den Tank-Anschlussstutzen umgibt, um den ersten Dichtungsring teilweise aufzunehmen.

Um eine stabile Verbindung zwischen Verbindungsvorrichtung und Druckbehälter zu schaffen, ist es besonders vorteilhaft, wenn der Druckbehälter-Anschlussstutzen von einer ringförmigen Wand gebildet ist, an der innen ein Innengewinde zum Aufschrauben auf ein Außengewinde des Druckbehälters ausgebildet ist.

Für einen dichten Kontakt zwischen dem Druckbehälter-Anschlussstutzen und dem Auslass des Druckbehälters ist es hierbei zweckmäßig, wenn an einer Stirnfläche der ringförmigen Wand des Druckbehälter-Anschlussstutzens eine ringförmige Nut ausgebildet ist, die einen zweiten Dichtungsring teilweise aufnimmt.

Hierbei ist es von Vorteil, wenn der zweite Dichtring in der ringförmigen Nut des Druckbehälter-Anschlussstutzens und das stiftförmige Betätigungselement so zueinander angeordnet sind, dass der zweite Dichtring zwischen der Stirnfläche der ringförmigen Wand und einem Behälterdeckel des Druckbehälters noch komprimierbar ist, so dass das stiftförmige Betätigungselement zum Öffnen des Auslassventils des Druckbehälters weiter in Richtung auf dieses verschiebbar ist.

Es ist zweckmäßig, wenn der Mittelteil zumindest eine Bohrung in Axialrichtung der Anschlussstutzen aufweist, um den Durchlass zwischen Druckbehälter-Anschlussstutzen und dem Tank-Anschlussstutzen zu bilden.

Für einen guten Durchlass des Additivs durch den Mittelteil ist es von Vorteil, wenn die Bohrungen in Umfangsrichtung gleich beabstandet um die zentrale Achse des Mittelteils herum angeordnet sind, wobei das Mittelteil eine zentrale Bohrung aufweisen kann.

In diese zentrale Bohrung kann vorteilhafterweise das stiftförmige Betätigungselement eingesetzt und in dieser mit dem Mittelteil fest verbunden sein.

Hierbei ist es zweckmäßig, das stiftförmige Betätigungselement als ein Rohr auszubilden, um jedoch einen zusätzlichen Durchlass durch das Mittelteil zu ermöglichen, ist es von Vorteil, wenn das stiftförmige Betätigungselement als Schlitzrohr ausgebildet ist.

Die Erfindung wird im Folgenden beispielsweise anhand der Zeichnung näher erläutert. Es zeigen:
Fig. 1a eine geschnittene Darstellung der erfindungsgemäßen Verbindungsvorrichtung entlang deren zentraler Achse.
Fig. 1b eine Draufsicht auf die dem Druckbehälter zugewandte Stirnseite der Verbindungsvorrichtung gemäß der vorliegenden Erfindung.
Fig. 2a eine geschnittene Darstellung der erfindungsgemäßen Verbindungsvorrichtung, die in einen Flüssiggastankeinfüllstutzen vollständig eingeschraubt und einem Druckbehälter gegenüberliegend angeordnet ist.
Fig. 2b eine geschnittene Darstellung der erfindungsgemäßen Verbindungsvorrichtung, die in einen Flüssiggastankeinfüllstutzen vollständig eingeschraubt und in die der Druckbehälter so eingeschraubt ist, dass der Auslass des Druckbehälters gegenüber der Umgebung abgedichtet ist, und
Fig. 2c eine geschnittene Darstellung der erfindungsgemäßen Verbindungsvorrichtung, die in einen Flüssiggastankeinfüllstutzen vollständig eingeschraubt und in die der Druckbehälter so eingeschraubt ist, dass dessen Auslassventil geöffnet ist.

In den verschiedenen Figuren der Zeichnung sind einander entsprechende Bauteile mit gleichen Bezugszeichen versehen.

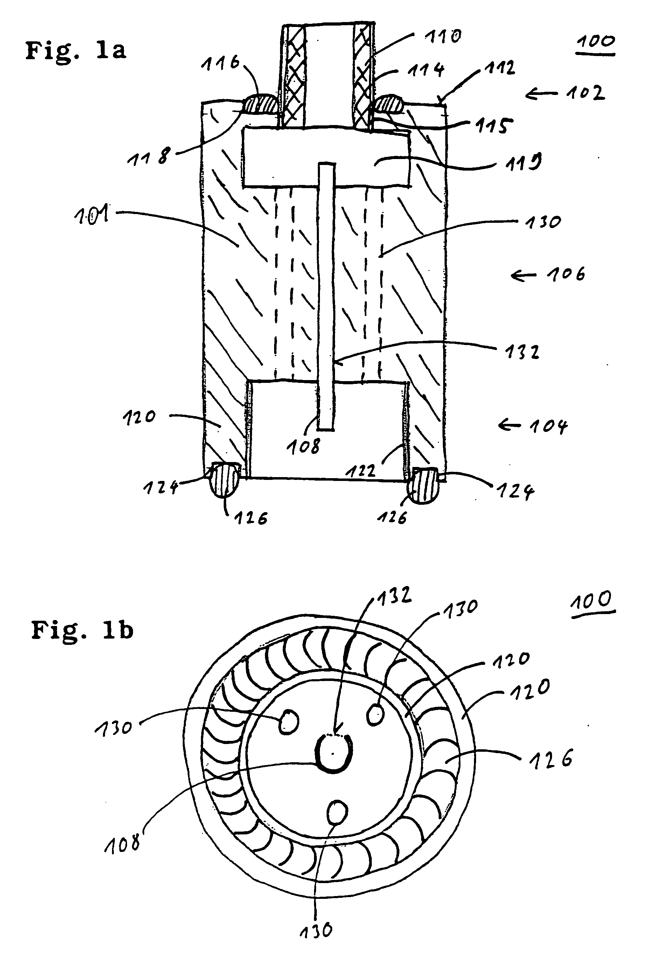

In Fig. 1 ist eine Schnittansicht der erfindungsgemäßen Verbindungsvorrichtung 100 gezeigt. Hierbei verläuft die Schnittebene durch die zentrale Achse der im Wesentlichen radialsymetrisch aufgebauten Verbindungsvorrichtung 100.

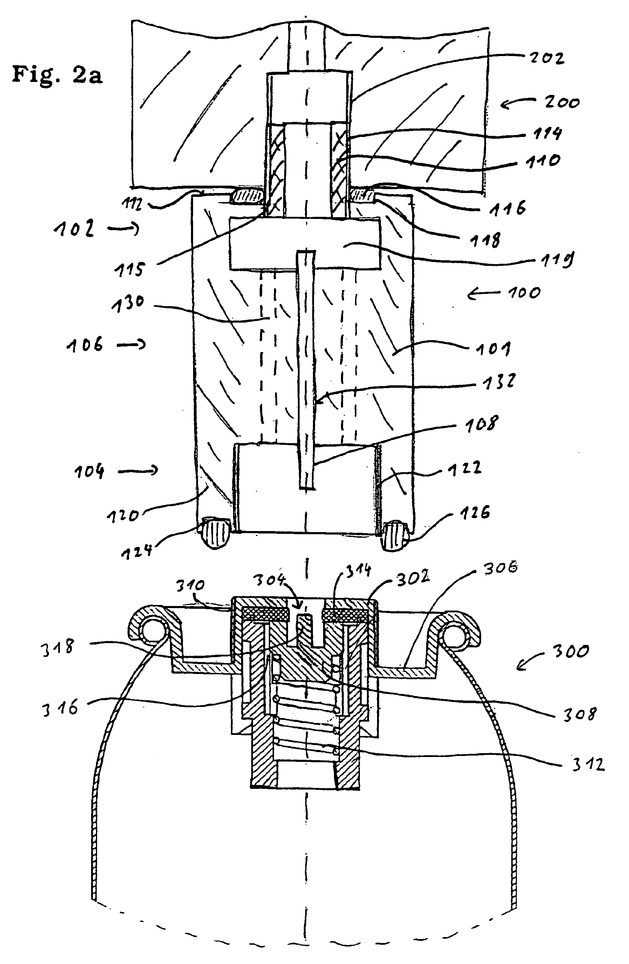

Die Verbindungsvorrichtung 100 umfasst einen Tank-Anschlussstutzen 102 für die Verbindung mit dem Flüssiggastank eines Kraftfahrzeugs, einen Druckbehälter-Anschlussstutzen 104 für die Verbindung mit einem Druckbehälter 300 (Fig. 2a) und einen Mittelteil 106, der das Additiv innerhalb der Verbindungsvorrichtung von dem Druckbehälter-Anschlussstutzen 104 zu dem Tank-Anschlussstutzen 102 über einen Durchlass leitet. Diese drei Teile der Verbindungsvorrichtung bilden zusammen einen Adapterkörper 101 der Verbindungsvorrichtung 100. Hierbei ist es möglich, dass diese drei Teile einstückig aufgebaut sind, es ist jedoch auch vorstellbar, dass der Adapterkörper 101 aus verschiedenen Teilen aufgebaut ist, die wiederum aus verschiedenen Materialien bestehen können.

Der Tank-Anschlussstutzen 102 umfasst ein zylinderförmiges Anschlussstück 110. das von der Stirnfläche 112 des Tank-Anschlussstutzen 102 des Adapterkörpers 101 hervorragt. Hierbei ist das zylinderförmige Anschlusstück 110 mit einem Außengewinde 114 versehen, welches in ein Innengewinde 202 (Fig. 2a) eines Flüssiggastankeinfüllstutzens 200 eingeschraubt werden kann. Es ist sinnvoll, das Außengewinde 114 an dem zylinderförmigen Anschlussstück 110 an der gesamten äußeren Oberfläche auszubilden und das zylinderförmige Anschlussstück 110 in ein entsprechendes Innengewinde 115 in einer zentralen Öffnung in der Stirnfläche 112 des Adapterkörper 101 einzuschrauben und gegebenenfalls zu verkleben. Hierbei kann die Öffnung als stirnseitige, axiale Bohrung des Adapterkörpers 101 ausgebildet sein.

Das zylinderförmige Anschlussstück 110 ist von einem ersten Dichtungsring 116 umgeben, der auf der Stirnfläche 112 des Adapterkörpers 101 aufliegt. Wie in Fig. 2a gezeigt, bildet der Dichtungsring 116 bei einem Einschrauben des Tank-Anschlussstutzens 102 in den Flüssiggastankeinfüllstutzen 200 einen dichten Abschluss zwischen diesen beiden Elementen. Der erste Dichtungsring 116 kann dabei in einer Ringnut 118, die in der Stirnfläche 112 um das zylinderförmige Anschlusstück 110 ausgebildet ist, teilweise aufgenommen werden. Hierbei ist es, wie in Fig. 1a gezeigt, möglich, die Ringnut 118 so auszubilden, dass ihre radiale Innenwand vom zylindrischen Anschlusstück 110 und ihre radiale Außenwand durch eine Stufe in Radialrichtung in der Stirnfläche 112 des Adapterkörpers 101 gebildet wird.

Das zylinderförmige Anschlusstück 110 ist so in den Adapterkörper 101 eingesetzt oder eingeschraubt, dass es einen Auslassraum 119 bündig abschließt oder in diesen hineinragt. Der radialsymetrisch aufgebaute Auslassraum 119 kann hierbei entweder einen dem Innendurchmesser des Druckbehälter-Anschlussstutzens 104 oder dem Außendurchmesser des zylindrischen Anschlussstücks 110 entsprechenden Durchmesser aufweisen. Im zweiten Fall entspricht der Auslassraum 119 lediglich einer verlängerten Bohrung, die mit dem Innengewinde 115 versehen und durch den Mittelteil 106 begrenzt ist.

An der der Stirnfläche 112 des Adapterkörpers 101 gegenüberliegenden Stirnseite der Verbindungsvorrichtung 100 ist der Druckbehälter-Anschlussstutzen 104 ausgebildet. Der Druckbehälter-Anschlussstutzen 104 wird im Wesentlichen von einer ringförmigen Wand 120 in dem Adapterkörper 101 gebildet, die an ihrer Innenseite ein Innengewinde 122 aufweist, das auf ein Au-Bengewinde 310 (siehe Fig. 2a) eines Druckbehälters 300 aufgeschraubt werden kann. Um einen dichten Kontakt mit dem Druckbehälter herzustellen, ist an der Stirnfläche der ringförmigen Wand 120 des Druckbehälter-Anschlussstutzens 104 eine ringförmige Nut 124 ausgebildet, die einen zweiten Dichtungsring 126 teilweise aufnimmt. Hierbei ist die ringförmige Nut 124 so ausgebildet, dass sie den zweiten Dichtungsring 126 ausreichend festhalten kann, sie ist jedoch gerade so tief, dass der zweite Dichtungsring 126 trotzdem ein möglichst großes Spiel zwischen seinem nicht komprimierten Zustand und seinem vollständig zusammengedrückten Zustand in Axialrichtung besitzt.

Das Mittelteil 106 verbindet den Druckbehälter-Anschlussstutzen 104 mit dem Tank-Anschlussstutzen 102, wobei dieses einen Durchlass für das Additiv aufweist, das aus dem Druckbehälter 300 in den Flüssiggastankeinfüllstutzen 200 geleitet wird. Der Mittelteil 106 kann einstückig aus dem Adapterkörper 101 gebildet sein, es ist jedoch auch möglich, dass die ringförmige Wand 120 des Druckbehälter-Anschlussstutzens 104 sich bis zu dem Auslassraum 119 erstreckt und über ihre ganze Länge in Axialrichtung ein Innengewinde aufweist, wobei ein Innenteil (nicht gezeigt), das ein Außengewinde aufweist, über den Druckbehälter-Anschlussstutzen 104 in Axialrichtung eingeschraubt und bei Erreichen einer mittleren Position in der Verbindungsvorrichtung 100 verklebt oder anderweitig befestigt wird.

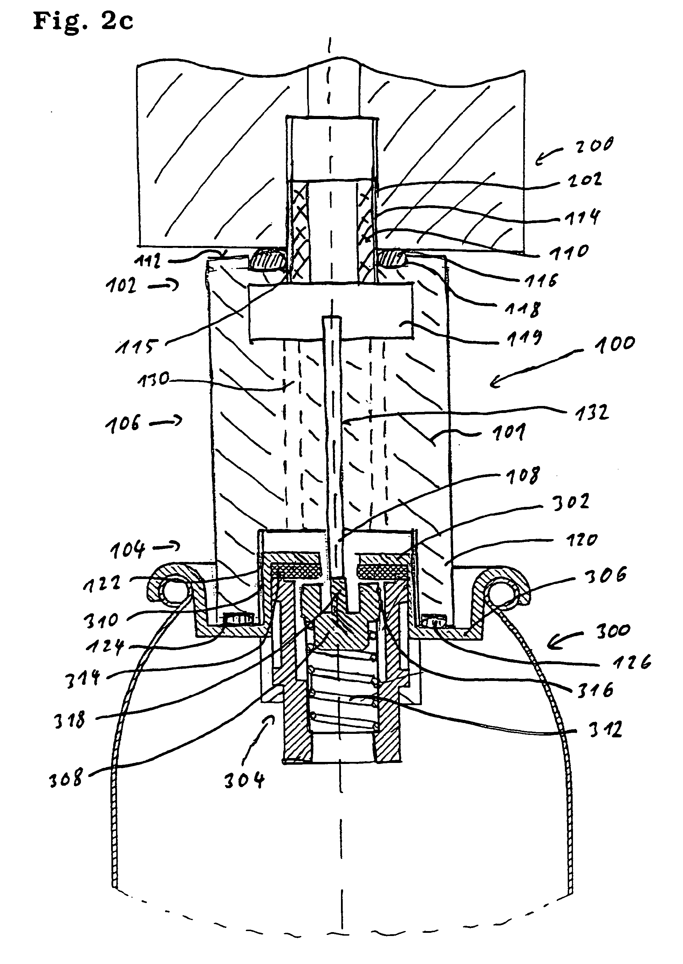

Hierbei ist es weiter möglich, dieses Innenteil nicht zu verkleben, um eine Möglichkeit zur Einstellung der axialen Höhe eines stiftförmigen Betätigungselements 108, wie später noch erläutert werden soll, zu ermöglichen. Der Mittelteil 106 weist zumindest eine Bohrung 130, 132 in Axialrichtung der Anschlussstutzen auf, um den Durchlass zwischen Druckbehälter-Anschlussstutzen 104 und den Tank-Anschlussstutzen 102 zu bilden. Hierbei können die Bohrungen 130 in Umfangsrichtung gleich beabstandet um die zentrale Achse des Mittelteils 106 herum angeordnet sein. In dem in Fig. 1a gezeigten Ausführungsbeispiel sind die Durchlässe 130 als Bohrungen vorgesehen, es ist jedoch jede Art von Durchlass denkbar, die einen Durchgang für das gasförmige Additiv schafft. Der Mittelteil 106 weist ferner eine zentrale Bohrung 132 in Axialrichtung der Anschlussstutzen auf. Hierbei ist in diese zentrale Bohrung 132 das stiftförmiges Betätigungselement 108 eingesetzt, das, wie in Fig. 1b gezeigt, als Schlitzrohr ausgebildet ist, um einen Durchlass des gasförmigen Additivs auch dann zu gewährleisten, wenn das stiftförmige Betätigungselement 108 auf das Auslassventil 304 (vgl. Fig. 2c) drückt.

Es ist jedoch auch vorstellbar, das stiftförmige Betätigungselement 108 als massiven Stift oder als Rohr auszubilden, wobei dann das gasförmige Additiv durch die Bohrungen 130 geleitet wird. Es ist darüber hinaus auch denkbar, das stiftförmige Betätigungselement 108 mit einem Außengewinde zu versehen, welches wiederum in ein Innengewinde in der zentralen Bohrung 132 eingeschraubt ist, um deren relative Lage in Axialrichtung der Anschlussstutzen einstellen zu können. Die Ausführung des stiftförmigen Betätigungselements 108 als Schlitzrohr hat den Vorteil, dass sich das Schlitzrohr innerhalb der zentralen Bohrung 132 ausdehnt und sich somit in einfacher Weise innerhalb der zentralen Bohrung 132 verklemmt, wobei es einen ausreichenden Halt (jedoch mit einstellbarer Lage) liefert.

Das stiftförmige Betätigungselement 108 wirkt in besonderer Weise mit dem zweiten Dichtungsring 126 an der Stirnseite der ringförmigen Wand 120 des Druckbehälter-Anschlussstutzens 104 zusammen, wie im Folgenden anhand der Fig. 2a bis 2c gezeigt wird, wobei diese Figuren einen Befüllungsvorgang eines Flüssiggastanks mit einem Additiv aus einem Druckbehälter 300 illustrieren.

Für die Zugabe eines Additivs in einen Flüssiggastank eines Kraftfahrzeugs oder einer ähnlichen Maschine, die einen Verbrennungsmotor aufweist, wird die Verbindungsvorrichtung 100 zunächst in den Tankeinfüllstutzen 200 eingeschraubt.

Das Additiv für Flüssiggas-Treibstoffe dient im wesentlichen dem Ventileinschlagschutz, dem Korrosionsschutz, dem Alterungsschutz, der Verhinderung von Ablagerungen auf Motorteilen und im Gasverdampfersystem sowie der Reinhaltung des Abgases von mit dem Flüssiggas betriebenen Verbrennungsmotoren. Insbesondere ergibt sich bei mit Flüssiggas betriebenen Verbrennungsmotoren das Problem, dass neben den Hauptbestandteilen Propan, Butan und gegebenenfalls Pentan noch ungesättigte Anteile, wie Ethylen und Propylen enthalten sind, jedoch keine Bestandteile (wie bei Benzin), welche beim Betrieb des Kraftfahrzeugs unvollständig verbrennen, um die Schmierung, namentlich der Einlassventile, sicherzustellen.

Ein üblicher Flüssiggastank weist einen Betriebsdruck von etwa 6 bis 8 bar auf. Der Flüssiggaseinfüllstutzen 200 kann ein genormtes Produkt sein und wird beispielsweise von der italienischen Firma Tomasetto Achille S.p.A. unter den Modellnummern MVAT3302.2. MVAT3302.1 oder MVAT3302.15 vertrieben. Der Flüssiggaseinfüllstutzen 200 weist hierbei eine Schrauböffnung mit einem Innengewinde 202 sowie ein Kugelrückschlagventil (nicht gezeigt) auf. Hierbei soll jedoch betont werden, dass für die Verbindungsvorrichtung 100 auf der Seite des Tank-Anschlussstutzens 102 jede Form von Anschlussverbindung gewahlt werden kann, die zu diesem Flüssiggaseinfüllstutzen komplementär ist.

Bei dem Einschrauben der Verbindungsvorrichtung 100 in den Tankeinfüllstutzen dichtet der erste Dichtungsring 116 die in Figur 2a gebildete Anschlussverbindung ab.

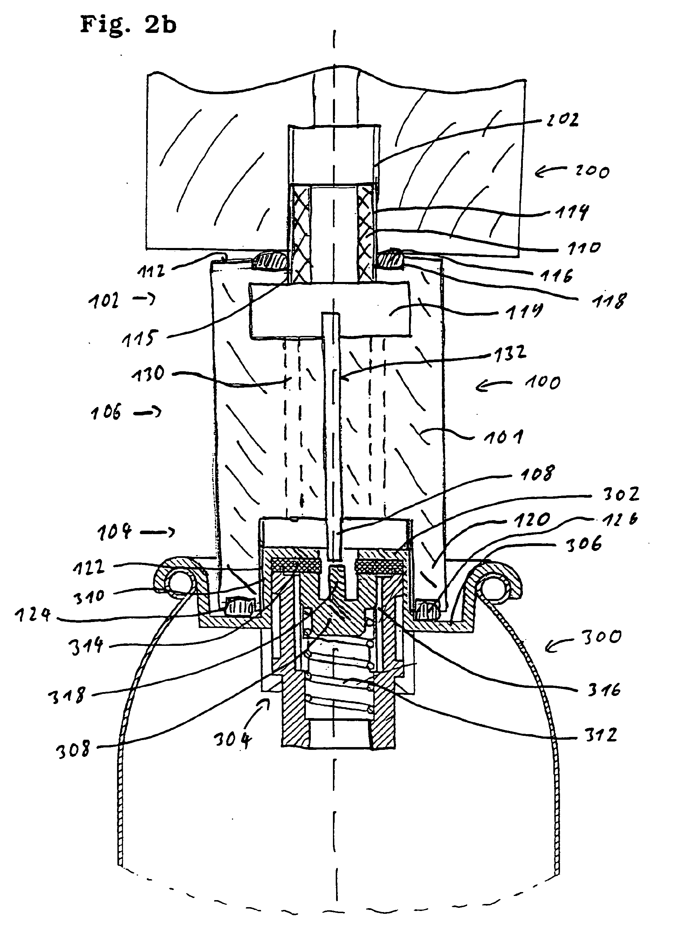

Wie in den Figuren 2b und 2c gezeigt, wird nach einer Herstellung der Verbindung zwischen Verbindungsvorrichtung 100 und Tankeinfüllstutzen 200 ein Druckbehälter 300 aufgeschraubt. Der Druckbehälter 300, der eine Aerosolsprühdose sein kann, enthält ein Gemisch aus Flüssiggas, Methan bzw. Wasserstoff und eine Additivmischung, wobei das Methan oder der Wasserstoff dazu verwendet wird, den Innendruck des Druckbehälters 300 auf einen Innendruck von 10 bar einzustellen. Somit kann bei diesem Innendruck des Druckbehälters 300 beim Verbinden mit dem Flüssiggastank der gesamte Inhalt des Druckbehälters 300 problemlos in den Flüssiggastank eingebracht werden, dessen Innendruck maximal 8 bar bei 30°C beträgt.

Der Druckbehälter 300 ist ein handelsübliches und weltweit genormtes Produkt mit einem Maximaldruck von 18 bis 21 bar je nach Dosengröße und einer 2-Zoll-Ventilkappe, die an dem Auslassventil 304 mit einem Außengewinde 310 versehen ist. Das Auslassventil 304 des Druckbehälters 300 weist einen Ventilkörper 308 auf, der durch eine Druckfeder 312 gegen einen Dichtring 314 gedrückt wird, wodurch ein Durchlasskanal 316 verschlossen bleibt. Der Ventilkörper 308 ist im Wesentlichen in seinem Querschnitt W-förmig ausgebildet, wobei sich der zentrale Mittelteil 318 des Ventilkörpers 308 in Richtung des Auslasses erstreckt und dazu vorgesehen ist, durch einen punktuellen Druck durch das stiftförmige Betätigungselement 108 in Richtung des Doseninneren gedrückt zu werden, wobei hierdurch das Auslassventil 304 geöffnet wird (siehe Figur 2c).

Hierbei wird, um das Ventil zu öffnen, das Innengewinde 122 des Druckbehälter-Anschlussstutzens 104 der Verbindungsvorrichtung 100 in das Außengewinde 310 des Anschlussstücks 302 des Druckbehälters 300 eingeschraubt.

Wie in Figur 2b gezeigt, tritt der zweite Dichtungsring 126 mit der Oberfläche des Behälterdeckels 306 in Kontakt, wobei das Betätigungselement 108 das Mittelteil 318 des Ventilkörpers 308 noch nicht berührt. Durch ein weiteres Einschrauben des Druckbehälters 300 in den Druckbehälter-Anschlussstutzen 104 kommt schließlich ein vollständig dichter Kontakt gegenüber der Umgebung durch den zweiten Dichtungsring 126 der Verbindungsvorrichtung 100 zustande. Wird der Druckbehälter 300 schließlich noch weiter eingeschraubt, so tritt das Betätigungselement 108 mit dem Ventilkörper 308 in Kontakt und drückt den Ventilkörper schließlich in Richtung des Druckbehälterinneren, um das Ventil 304 zu öffnen.

Somit kann aufgrund einer Schraubbewegung das Ventil kontrolliert und durch die Umsetzung der Drehbewegung in eine Horizontalbewegung auch kraftvoll geöffnet werden.

Durch das Zusammenwirken des zweiten Dichtungsrings 126 und des Betätigungselements 108 müssen also keine zusätzlichen Dichtungsvorrichtungen vorgesehen werden, da der zweite Dichtring 126 in der ringförmigen Nut 124 des Druckbehälter-Anschlussstutzens 104 und das stiftförmige Betätigungselement 108 so zueinander angeordnet sind, dass der zweite Dichtring 126 zwischen der Stirnfläche der ringförmigen Wand 120 und dem Behälterdeckel 306 des Druckbehälters 300 noch komprimierbar ist, so dass das stiftförmige Betätigungselement 108 zum Öffnen des Auslassventils 304 des Druckbehälters 300 weiter in Richtung auf dieses verschiebbar ist.

Um diese sehr feine Abstimmung zwischen dem vorhandenen Spiel in Axialrichtung des zweiten Dichtungsrings 126 aufgrund seiner Komprimierbarkeit, in welchem er einen dichten Abschluss mit dem Behälterdeckel 306 schafft, und dem dazu angeordneten Betätigungselement 308, das innerhalb dieses Spiels anfangs das Ventil noch geschlossen hält, jedoch vor einem Kontakt der Stirnfläche des Druckbehälter-Anschlussstutzens 104 mit dem Behälterdeckel 306 das Ventil 304 geöffnet haben muss, zu erreichen, gibt es folgende Einstellmöglichkeiten.

Hierbei kann beispielsweise das stiftförmige Betätigungselement 108 mit einem Außengewinde versehen sein, das in die zentrale Bohrung 132 eingeschraubt wird. Hierbei kann zur Justage die Verbindungsvorrichtung 100 vollständig auf einen genormten Druckbehälter 300 aufgeschraubt werden (wie in Figur 2c gezeigt), wobei die Verbindungsvorrichtung 100 jedoch nicht in den Tankeinfüllstutzen 200 eingeschraubt ist. Danach kann das stiftförmige Betätigungselement 108, das beispielsweise an seiner dem Druckbehälter 300 abgewandten Stirnseite mit einer zu einem Werkzeug komplementären Ausnehmung versehen ist, durch ein Werkzeug wie beispielsweise einen Schraubenzieher so weit eingeschraubt werden, bis dieses gerade das Auslassventil 304 öffnet. Nach der Justage kann das Betätigungselement dann verklebt oder mit einem Feststellring fixiert werden.

Es ist jedoch auch möglich, ein Schlitzrohr, das in der zentralen Bohrung 132 verklemmt ist, soweit in die zentrale Bohrung 132 einzudrücken oder einzuschlagen, bis das Ventil 304 leicht geöffnet wird. Schließlich ist es auch vorstellbar, das Betätigungselement 108 fest mit der zentralen Bohrung 132 zu verbinden, wobei jedoch der Mittelteil 106 der Verbindungsvorrichtung aus einer Außenwand mit einem Innengewinde und einem Innenteil mit einem Außengewinde besteht, das wiederum durch eine Schraubbewegung verstellbar ist.

Somit kann also die Verbindungsvorrichtung 100 nach seiner Herstellung leicht mittels eines genormten Druckbehälters 300 justiert werden, was alleine schon aufgrund der Fertigungstoleranz des verwendeten zweiten Dichtungsrings 126 nötig ist.

Durch die vorliegende Erfindung wird also eine Verbindungsvorrichtung 100 geschaffen, die einen einfachen Aufbau besitzt, wobei bei dem Druckbehälter-Anschlussstutzen 104 lediglich an dessen Stirnseite ein Dichtungsring und keine weiteren Abdichtungsvorrichtungen vorgesehen werden müssen, wie beispielsweise ein an der Außenwand vorgesehener Dichtungsring, der mit einer Innenwand des Druckbehälterdeckels in Verbindung tritt. Somit wird eine einfache Handhabung bei einem Einleiten eines Additivs in einen Flüssiggastank für einen Benutzer gewährleistet. Ferner wird die Lebensdauer einer solchen Verbindungsvorrichtung erhöht, da der Verschleiss durch Vorsehen lediglich eines Dichtungsrings reduziert ist.

## Patentansprüche

1. Verbindungsvorrichtung (100) zum Verbinden eines Druckbehälters (300) für ein Additiv mit einem Flüssiggastankeinfüllstutzen (200), wobei der Druckbehälter (300) ein Anschlussstück (302) mit einem Auslassventil (304) aufweist, das durch einen punktuellen Druck in Richtung des Druckbehälters (300) geöffnet werden kann, mit
einem Adapterkörper (101), der
- an seinem einen Ende einen Tank-Anschlussstutzen (102) zur druckdichten, lösbaren Verbindung mit dem Flüssiggastankeinfüllstutzen (200),
- an seinem anderen Ende einen Druckbehälter-Anschlussstutzen (104) mit einem stirnseitigen Dichtungselement ohne weitere Abdichtungsvorrichtungen zur druckdichten, lösbaren Verbindung mit dem Druckbehälter (300), und
- in seinem Mittelteil (106) einen Durchlass aufweist,
-- durch den ein Additiv von dem Druckbehälter-Anschlussstutzen (104) zu dem Tank-Anschlussstutzen (102) leitbar ist und
-- an dem ein stiftförmiges Betätigungselement (108) fest verbunden ist, das derart in den Druckbehälter-Anschlussstutzen (104) hineinragt, dass es bei einem Verbinden des Druckbehälter-Anschlussstutzens (104) mit dem Druckbehälter (300) das Auslassventil (304) desselben erst öffnet, wenn das Dichtungselement an der Stirnseite des Druckbehälter-Anschlussstutzens (104) einen dichten Kontakt zwischen Druckbehälter-Anschlussstutzen (104) und Druckbehälter (300) geschaffen hat, wobei das Auslassventil (304) unter weiterer Komprimierung des Dichtungselements öffenbar ist.

2. Verbindungsvorrichtung nach Anspruch 1, **dadurch gekennzeichnet, dass** der Tank-Anschlussstutzen (102) als ein zylinderförmiges Anschlussstück (110) mit einem Außengewinde (114) zur Aufnahme in dem mit einem Innengewinde (202) versehenen Flüssiggastankeinfüllstutzen (200) ausgebildet ist.

3. Verbindungsvorrichtung nach Anspruch 2, **dadurch gekennzeichnet, dass** das zylinderförmige Anschlussstück (110) in einer stirnseitigen, axialen Bohrung des Adapterkörpers (101) befestigt ist.

4. Verbindungsvorrichtung nach Anspruch 1, 2 oder 3, **dadurch gekennzeichnet, dass** auf einer dem Tank-Anschlussstutzen (102) benachbarten Stirnfläche (112) des Adapterkörpers (101) ein erster Dichtungsring (116) angeordnet ist, der den Tank-Anschlussstutzen (102) umgibt.

5. Verbindungsvorrichtung nach Anspruch 4, **dadurch gekennzeichnet, dass** in der Stirnfläche (112) des Adapterkörpers (101) eine Ringnut (118) gebildet ist, die den Tank-Anschlussstutzen (102) umgibt, um den ersten Dichtungsring (116) teilweise aufzunehmen.

6. Verbindungsvorrichtung nach einem der vorstehenden Ansprüche, **dadurch gekennzeichnet, dass** der Druckbehälter-Anschlussstutzen (104) von einer ringförmigen Wand (120) gebildet ist, an der innen ein Innengewinde (122) zum Aufschrauben auf ein Außengewinde (310) des Druckbehälters (300) ausgebildet ist.

7. Verbindungsvorrichtung nach Anspruch 6, **dadurch gekennzeichnet, dass** an einer Stirnfläche der ringförmigen Wand (120) des Druckbehälter-Anschlussstutzens (104) eine ringförmige Nut (124) ausgebildet ist, die einen zweiten Dichtungsring (126) teilweise aufnimmt.

8. Verbindungsvorrichtung nach Anspruch 7, **dadurch gekennzeichnet, dass** der zweite Dichtring (126) in der ringförmigen Nut (124) des Druckbehälter-Anschlussstutzens (104) und das stiftförmige Betätigungselement (108) so zueinander angeordnet sind, dass der zweite Dichtring (126) zwischen der Stirnfläche der ringförmigen Wand (120) und einem Behälterdeckel (306) des Druckbehälters (300) noch komprimierbar ist, so dass das stiftförmige Betätigungselement (108) zum Öffnen des Auslassventils (304) des Druckbehälters (300) weiter in Richtung auf dieses verschiebbar ist.

9. Verbindungsvorrichtung nach einem der vorstehenden Ansprüche, **dadurch gekennzeichnet, dass** der Mittelteil (106) zumindest eine Bohrung (130, 132) in Axialrichtung der Anschlussstutzen aufweist, um den Durchlass zwischen Druckbehälter-Anschlussstutzen (104) und dem Tank-Anschlussstutzen (102) zu bilden.

10. Verbindungsvorrichtung nach Anspruch 9, **dadurch gekennzeichnet, dass** die Bohrungen (130) in Umfangsrichtung gleich beabstandet um die zentrale Achse des Mittelteils (106) herum angeordnet sind.

11. Verbindungsvorrichtung nach Anspruch 9 oder 10, **dadurch gekennzeichnet, dass** das Mittelteil (106) eine zentrale Bohrung (132) aufweist.

12. Verbindungsvorrichtung nach Anspruch 11, **dadurch gekennzeichnet, dass** das stiftförmige Betätigungselement (108) in die zentrale Bohrung (132) eingesetzt und in dieser mit dem Mittelteil (106) fest verbunden ist.

13. Verbindungsvorrichtung nach Anspruch 12, **dadurch gekennzeichnet, dass** das stiftförmige Betätigungselement (108) ein Rohr ist.

14. Verbindungsvorrichtung nach Anspruch 13, **dadurch gekennzeichnet, dass** das stiftförmige Betätigungselement (108) ein Schlitzrohr ist.

## Claims

1. Connecting device (100) for connecting a pressure reservoir (300) for an additive to a liquid gas tank filler neck (200), the pressure reservoir (300) having a connection piece (302) with an outlet valve (304) which can be opened by a punctiform pressure in the direction of the pressure reservoir (300), with an adapter body (101) which
- has, at its one end, a tank connection piece (102) for the pressuretight, releasable connection to the liquid gas tank filler neck (200),
- has, at its other end, a pressure-reservoir connection piece (104) with a front-side sealing element without further sealing devices for the pressuretight, releasable connection to the pressure reservoir (300), and
- has, in its centre part (106), a passage,
-- through which an additive can be routed from the pressure-reservoir connection piece (104) to the tank connection piece (102) and
-- to which a pin-shaped actuating element (108) is attached firmly which protrudes into the pressure-reservoir connection piece (104) in such a way that it, in the case of a connection of the pressure-reservoir connection piece (104) to the pressure reservoir (300), does not open the outlet valve (304) of the latter until the sealing element on the front side of the pressure-reservoir connection piece (104) has produced a sealed contact between the pressure-reservoir connection piece (104) and the pressure reservoir (300), it being possible for the outlet valve (304) to be opened with further compression of the sealing element.

2. Connecting device according to Claim 1, **characterized in that** the tank connection piece (102) is configured as a cylindrical connection piece (110) with an external thread (114) for being received in the liquid gas tank filler neck (200) which is provided with an internal thread (202).

3. Connecting device according to Claim 2, **characterized in that** the cylindrical connection piece (110) is fastened in a front-side, axial hole of the adapter body (101).

4. Connecting device according to Claim 1, 2 or 3, **characterized in that** a first sealing ring (116) which surrounds the tank connection piece (102) is arranged on a front face (112) of the adapter body (101), which front face (112) is adjacent to the tank connection piece (102).

5. Connecting device according to Claim 4, **characterized in that** an annular groove (118) is formed in the front face (112) of the adapter body (101), which annular groove (118) surrounds the tank connection piece (102), in order to receive the first sealing ring (116) partially.

6. Connecting device according to one of the preceding claims, **characterized in that** the pressure-reservoir connection piece (104) is formed by an annular wall (120), on the inside of which an internal thread (122) is formed for being screwed onto an external thread (310) of the pressure reservoir (300).

7. Connecting device according to Claim 6, **characterized in that** an annular groove (124) which receives a second sealing ring (126) partially is formed on a front face of the annular wall (120) of the pressure-reservoir connection piece (104).

8. Connecting device according to Claim 7, **characterized in that** the second sealing ring (126) in the annular groove (124) of the pressure-reservoir connection piece (104) and the pin-shaped actuating element (108) are arranged with respect to one another in such a way that the second sealing ring (126) can still be compressed between the front face of the annular wall (120) and a reservoir cover (306) of the pressure reservoir (300), with the result that the pin-shaped actuating element (108) can be displaced further in the direction of the outlet valve (304) of the pressure reservoir (300) in order to open it.

9. Connecting device according to one of the preceding claims, **characterized in that** the centre part (106) has at least one hole (130, 132) in the axial direction of the connection pieces, in order to form the passage between the pressure-reservoir connection piece (104) and the tank connection piece (102).

10. Connecting device according to Claim 9, **characterized in that** the holes (130) are arranged spaced apart identically in the circumferential direction around the central axis of the centre part (106).

11. Connecting device according to Claim 9 or 10, **characterized in that** the centre part (106) has a central hole (132).

12. Connecting device according to Claim 11, **characterized in that** the pin-shaped actuating element (108) is inserted into the central hole (132) and is connected firmly in the latter to the centre part (106).

13. Connecting device according to Claim 12, **characterized in that** the pin-shaped actuating element (108) is a tube.

14. Connecting device according to Claim 13, **characterized in that** the pin-shaped actuating element (108) is a split tube.

## Revendications

1. Dispositif de raccordement (100) pour raccorder un contenant sous pression (300) pour un additif comportant une pipe de remplissage de réservoir à gaz liquide (200), dans lequel le contenant sous pression (300) comprend une pièce de raccordement (302) avec une soupape de sortie (304) qui peut être ouverte sous une pression ponctuelle en direction du contenant sous pression (300), comprenant
un corps adaptateur (100) qui comprend
- à l'une de ses extrémités une pipe de raccordement de réservoir (102) pour le raccordement détachable et étanche à la pression avec la pipe de remplissage de réservoir à gaz liquide (200),
- à son autre extrémité une pipe de raccordement de contenant sous pression (104) avec un élément d'étanchement du côté frontal sans autre moyen d'étanchement, pour la liaison détachable et étanche à la pression avec le contenant sous pression (300), et
- une traversée dans sa partie médiane (106)
-- à travers laquelle un additif peut être mené depuis la pipe de raccordement de contenant sous pression (104) à la pipe de raccordement de réservoir (102), et
-- à laquelle est fermement relié un élément d'actionnement (108) en forme de tige, qui pénètre dans la pipe de raccordement de contenant sous pression (104) de telle manière que lors d'une liaison de la pipe de raccordement de contenant sous pression (104) avec le contenant sous pression (300), la soupape de sortie (304) de celui-ci s'ouvre uniquement quand l'élément d'étanchement sur le côté frontal de la pipe de raccordement de contenant sous pression (104) a établi un contact étanche entre la pipe de raccordement de contenant sous pression (104) et le contenant sous pression (300), et ladite soupape de sortie (300) peut être ouverte en poursuivant la compression de l'élément d'étanchement.

2. Dispositif de raccordement selon la revendication 1, **caractérisé en ce que** la pipe de raccordement de réservoir (102) est réalisée comme une pièce de raccordement cylindrique (110) avec un pas de vis extérieur (114) pour être reçue dans la pipe de remplissage de réservoir à gaz liquide (200) dotée d'un pas de vis intérieure (202).

3. Dispositif de raccordement selon la revendication 2, **caractérisé en ce que** la pièce de raccordement cylindrique (110) est fixée dans un perçage axial du côté frontal du corps d'adaptateur (101).

4. Dispositif de raccordement selon la revendication 1, 2 ou 3, **caractérisé en ce qu'**une première bague d'étanchement (116), qui entoure la pipe de raccordement de réservoir (102), est agencée sur une face frontale (112) du corps d'adaptateur (101) voisine de la pipe de raccordement de réservoir (102).

5. Dispositif de raccordement selon la revendication 4, **caractérisé en ce qu'**une gorge annulaire (112), qui entoure la pipe de raccordement de réservoir (102), est formée dans la face frontale (112) du corps d'adaptateur (101), afin de recevoir partiellement la première bague d'étanchement (116).

6. Dispositif de raccordement selon l'une des revendications précédentes, **caractérisé en ce que** la pipe de raccordement de contenant sous pression (104) est formée par une paroi annulaire (120) sur laquelle un pas de vis intérieur (122) est réalisé à l'intérieur pour être vissé sur un pas de vis extérieur (310) du contenant sous pression (300).

7. Dispositif de raccordement selon la revendication 6, **caractérisé en ce qu'**une gorge annulaire (124), qui reçoit partiellement une seconde bague d'étanchement (126), est réalisée sur une face frontale de la paroi annulaire (120) de la pipe de raccordement de contenant sous pression (104).

8. Dispositif de raccordement selon la revendication 7, **caractérisé en ce que** la seconde bague d'étanchement (126) dans la gorge annulaire (124) de la pipe de raccordement de contenant sous pression (104) et l'élément d'actionnement (108) en forme de tige sont agencés l'un par rapport à l'autre de telle façon que la seconde bague d'étanchement (126) peut être encore comprimée entre la face frontale de la paroi annulaire (120) et un couvercle (306) du contenant sous pression (300), de telle façon que l'élément d'actionnement (108) en forme de tige peut être déplacé plus loin en direction du contenant sous pression (300) pour l'ouverture de la soupape de sortie (304) de celui-ci.

9. Dispositif de raccordement selon l'une des revendications précédentes, **caractérisé en ce que** la partie médiane (106) comporte au moins un perçage (130, 132) en direction axiale de la pipe de raccordement, afin de former la traversée entre la pipe de raccordement de contenant sous pression (104) et la pipe de raccordement de réservoir (102).

10. Dispositif de raccordement selon la revendication 9, **caractérisé en ce que** les perçages (130) sont agencés à des distances égales en direction périphérique tout autour de l'axe central de la partie médiane (106).

11. Dispositif de raccordement selon la revendication 9 ou 10, **caractérisé en ce que** la partie médiane (106) comporte un perçage central (132).

12. Dispositif de raccordement selon la revendication 11, **caractérisé en ce que** l'élément d'actionnement (108) en forme de tige est mis en place dans le perçage central (132) et est fermement relié à la partie médiane (106) dans celui-ci.

13. Dispositif de raccordement selon la revendication 12, **caractérisé en ce que** l'élément d'actionnement (108) en forme de tige est un tube.

14. Dispositif de raccordement selon la revendication 13, **caractérisé en ce que** l'élément d'actionnement (108) en forme de tige est un tube fendu.
